# FASCICULE DE BREVET EUROPEEN

(11) **EP 3 607 260 B1**
(45) Date de publication et mention de la délivrance du brevet: **04.05.2022**
(21) Numéro de dépôt: 18724938.8
(22) Date de dépôt: 03.04.2018
(51) Int. Cl.: F28D 20/02, F28D 20/00

(54) **DISPOSITIF DE STOCKAGE DE CALORIES/FRIGORIES ERGONOMIQUE**
ERGONOMISCHE KALORIEN/FRIGORIEN-SPEICHERVORRICHTUNG
ERGONOMIC CALORIE-/FRIGORIE-STORAGE DEVICE

(30) Priorité: 03.04.2017 FR 1752856
(43) Date de publication de la demande: 12.02.2020
(73) Titulaire: Eco-Tech Ceram, 66100 Perpignan (FR)
(72) Inventeur: MEFFRE, Antoine, 66600 Rivesaltes (FR); HOFFMANN, Jean-François, Abu Dhabi (AE)
(74) Mandataire: Delaveau, Sophie
(86) Numéro de dépôt international: PCT/FR2018/050827
(87) Numéro de publication internationale: WO 2018/185424

(56) Documents cités:
- EP-A2- 1 752 728
- WO-A1-2006/111045
- WO-A2-2008/014295
- FR-A1- 2 928 975
- GB-A- 2 489 011
- US-A1- 2010 199 975
- US-A1- 2012 031 119
- US-A1- 2013 298 538

## Description

### Domaine de l'invention

La présente invention concerne un dispositif de stockage, et/ou éventuellement de transport, de chaleur ou de froid, en vue de sa réutilisation ultérieure par transfert à un fluide, sur le même site ou sur un site différent.

Le domaine de l'invention s'inscrit dans le domaine du transport d'énergie, et plus particulièrement des dispositifs de stockage et/ou de transport de calories/frigories, en vue de leur réutilisation ultérieure par transfert thermique vers un fluide cible, tel qu'un flux gazeux.

### Art antérieur

On connait des dispositifs permettant de stocker de la chaleur, pour la réutiliser ultérieurement, éventuellement après transport sur un autre site.

Ces dispositifs comprennent un matériau, à inertie thermique, prévu pour emmagasiner de la chaleur pour ensuite la restituer ultérieurement, plus ou moins vite. Ces dispositifs comprennent une ouverture d'introduction d'un fluide dans le dispositif pour réaliser un échange thermique entre le fluide et le matériau à inertie thermique, et une ouverture d'extraction pour extraire le fluide se trouvant dans ledit dispositif après ledit échange thermique.

Les documents divulguant les caractéristiques de la préambule de la revendication 1 sont FR2928975A et GB2489011A.

### Inconvénients de l'art antérieur

L'utilisation de tels dispositifs est complexe, nécessite une manutention importante et peu ergonomique. De plus, ces dispositifs sont peu robustes de sorte qu'ils ne peuvent pas être transportés. Ainsi, ils offrent peu de flexibilité sur le site de réutilisation de la chaleur stockée qui, le plus souvent, doit être réutilisée sur le site où elle a été produite.

### Objectifs de l'invention

Un but de la présente invention est de remédier à ces inconvénients.

Un autre but de la présente invention est de proposer un dispositif de stockage de chaleur/froid présentant une plus grande flexibilité dans l'espace.

Un autre but de la présente invention est de proposer un dispositif de stockage de chaleur/froid plus robuste.

Un autre but de l'invention est de proposer un dispositif de stockage chaleur/froid adapté au transport sur semi-remorque.

Un autre but de la présente invention est de proposer un dispositif de stockage de chaleur/froid plus simple à utiliser, en nécessitant une manutention minimum lors des opérations de charge et de décharge.

Un autre but de la présente invention est de proposer un dispositif de stockage de chaleur/froid plus ergonomique.

### Exposé de l'invention

Au moins un des objectifs précités est atteint par un dispositif de stockage de chaleur/froid, par transfert depuis un fluide, dit de charge, en vue d'une réutilisation ultérieure par transfert vers un fluide, dit de décharge, ledit dispositif comprenant les caractéristiques de la revendication 1.

Avec le dispositif selon l'invention, le module de stockage qui comporte un conteneur interne rigide est dans son ensemble rigide et intégré dans le conteneur externe. Le dispositif selon l'invention est donc robuste, et peut être transporté sans, ou avec peu de risques de dégradation. Le conteneur interne peut être en acier, en particulier en acier inoxydable. Les parois du conteneur interne peuvent présenter une épaisseur comprise entre 2 mm et 8 mm, en particulier égale à 6 mm. Le conteneur interne peut avoir des dimensions inférieures aux dimensions du conteneur externe. Par exemple, le conteneur interne peut avoir une largeur comprise entre 140 cm et 240 cm, en particulier égale à 220 cm, et une hauteur comprise entre 140 cm et 240 cm, en particulier égale à 220 cm. Le conteneur interne peut avoir une longueur comprise entre 300 cm et 500 cm, en particulier égale à 400 cm. De plus, le conteneur interne peut être fixé au conteneur externe par tout moyen de fixation tel que par soudage, par vissage, par des sangles d'attache, par un système de rails, etc.

De plus, les interfaces externes de passage de(s) fluide(s) vers/depuis le module de stockage sont aménagées sur le conteneur externe rigide comprenant ledit module de stockage rigide, de sorte que les éventuels conduits véhiculant le fluide de charge et le fluide de décharge vers et depuis le module de stockage se trouvent tous à l'intérieur du conteneur externe. Les interfaces internes sont agencées sur le module de stockage et ainsi intégrées dans le conteneur externe. Par conséquent, le dispositif selon l'invention est plus robuste et peut être plus facilement transporté d'un site à l'autre avec moins de risques de dégradation.

De plus, les interfaces externes étant agencées sur une même paroi ou sur deux parois adjacentes dudit conteneur externe, le raccordement du dispositif à une source externe de(s) fluide(s) est plus rapide et plus facile. Par ailleurs, le dispositif selon l'invention peut être installé dans des endroits plus confinés ne laissant accès qu'à une ou deux faces dudit dispositifs, tout en garantissant un accès aux interfaces externes, ce qui n'est pas le cas des dispositifs de l'état de la technique. Par conséquent, le dispositif peut être utilisé sur des sites proposant une accessibilité réduite, contrairement aux dispositifs de l'état de la technique.

Préférentiellement, les interfaces externes sont agencées sur une même paroi du conteneur externe, en particulier sur une paroi latérale ou sur une paroi supérieure dudit conteneur externe. Dans cette configuration, l'utilisation du dispositif de l'invention (charge ou décharge des fluides) nécessite d'intervenir uniquement sur une paroi du conteneur externe en réduisant les opérations de manutention.

Alternativement, les interfaces externes peuvent être agencées sur deux parois adjacentes du conteneur externe, en particulier proches d'une arête formée par lesdites parois adjacentes.

La température de(s) fluide(s) dits froids traversant l'interface externe froide peut être une température inférieure à 600°C, de préférence inférieure à 200°C, tandis que la température de(s) fluide(s) dits chauds passant par l'interface externe chaude peut être comprise entre 200°C et 1000°C en étant supérieure à la température des fluides froids.

Dans une version avantageuse de réalisation du dispositif selon l'invention, les interfaces internes froides et chaudes sont distantes des parois du conteneur externe.

En particulier, l'interface interne froide peut être agencée sur une paroi du module de stockage distante des parois du conteneur externe de sorte qu'il existe ainsi un espace non nul entre la paroi comportant ladite interface interne froide et la paroi du conteneur externe en regard. Cet espace peut être notamment un espace vide ou occupé par un isolant.

En particulier, l'interface interne chaude peut être agencée sur une paroi du module de stockage distante des parois du conteneur externe, de sorte qu'il existe un espace non nul entre la paroi comportant ladite interface interne chaude et la paroi du conteneur externe en regard. Cet espace peut être un espace vide ou rempli par un isolant.

Dans une version avantageuse de réalisation du dispositif selon l'invention, lesdites interfaces internes peuvent être agencées sur deux parois différentes dudit module de stockage.

En particulier, les interfaces internes peuvent être agencées sur deux parois opposées du module de stockage. Ainsi, le fluide de charge et/ou de décharge injecté dans le module de stockage traverse la totalité du module de stockage, ce qui augmente le transfert thermique entre le module de stockage et ledit fluide.

Dans un mode de réalisation du dispositif selon l'invention, l'interface interne chaude peut être située à proximité et en regard de la paroi du conteneur externe recevant l'interface externe chaude.

En particulier, l'interface interne chaude peut se trouver sur une paroi du module de stockage se situant du côté de l'interface externe chaude. Cette configuration permet d'assurer une courte zone de raccordement chaude en évitant les phénomènes de déperdition et en optimisant la taille du dispositif de l'invention puisque que dans la plupart des cas, comme il sera vu plus loin, les conduits chauds sont de dimensions supérieures à celles des conduits froids.

Dans ce cas, l'interface interne froide peut se trouver sur une paroi du module de stockage opposée à la paroi du conteneur externe comportant les interfaces externes.

Préférentiellement, le dispositif selon l'invention comprend au moins un conduit froid, reliant l'interface externe froide à l'interface interne froide, et au moins un conduit chaud reliant l'interface externe chaude à l'interface interne chaude, les conduits froid et chaud étant agencés à l'intérieur du conteneur rigide externe

Le conduit froid peut être entouré d'un isolant thermique. L'isolant thermique permet de réduire la conduction thermique depuis l'extérieur vers le fluide de charge et/ou de décharge dans le conduit froid.

Dans le cas où l'interface interne froide se trouve à l'opposé des interfaces externes, alors le conduit froid peut être un conduit coudé pour permettre la liaison entre l'interface interne froide et l'interface externe froide.

Dans un mode de réalisation particulier du dispositif selon l'invention, le conduit froid peut avoir une dimension, en particulier un diamètre, inférieure à une dimension, en particulier un diamètre, du conduit chaud. La dimension, en particulier le diamètre, du conduit froid peut être comprise entre 200 mm et 400 mm, en particulier égale à 300 mm. La dimension, en particulier le diamètre, du conduit chaud peut être comprise entre 400 mm et 700 mm, en particulier égale à 500 mm.

L'agencement des conduits froids et chauds à l'intérieur du conteneur rigide externe assure au dispositif de l'invention un caractère ergonomique et mobile qui est optimal. En effet, l'ensemble des éléments structurels impliqués dans le fonctionnement des opérations de charge et de décharge étant contenus à l'intérieur du conteneur externe, l'utilisation du dispositif pour réaliser ces opérations de charge et de décharge ne nécessite que le branchement de conduits appropriés sur les interfaces externes chaudes et froids agencées à proximité sur le conteneur externe.

De façon avantageuse, le module de stockage est agencé à distance d'au moins une paroi du conteneur rigide externe en formant au moins un espace entre le module de stockage et ladite paroi pour permettre le passage des conduits froid et/ou chaud. A titre d'exemple, le module de stockage peut reposer sur la paroi inférieure du conteneur externe et peut être agencé à distance d'au moins une autre paroi, en particulier une paroi latérale, dudit conteneur externe de sorte qu'il existe un espace entre le module de stockage et ladite paroi. Le conduit froid peut ainsi être agencé dans cet espace. On peut prévoir à cet effet que le conduit soit de section rectangulaire, ce qui permet un agencement optimisé dudit conduit dans l'espace entre le module de stockage et ladite paroi.

La distance entre le module de stockage et ladite au moins une autre paroi du conteneur externe peut être comprise entre 200 mm et 1200 mm.

Dans une version de réalisation du dispositif selon l'invention, les interfaces internes peuvent être distantes des parois du conteneur externe, le module de stockage étant contigu à une seule paroi latérale dudit conteneur externe.

En particulier, l'espace entre le module de stockage et au moins une paroi du conteneur externe peut être vide ou occupé par un isolant thermique souple.

Dans un mode préféré de l'invention, le module de stockage est agencé contre la paroi inférieure du conteneur rigide externe et contre une paroi longitudinale dudit conteneur, les interfaces externes froides et chaudes sont agencées sur une même paroi latérale dudit conteneur externe, les interfaces internes froides et chaudes sont agencées sur deux parois opposées du module de stockage, et l'interface interne chaude est située à proximité et en regard de l'interface externe chaude. Dans cette configuration, comme évoqué précédemment, le conduit froid est agencé dans l'espace entre le module de stockage et la paroi longitudinale du container externe situé à distance dudit module de stockage.

Dans un mode particulièrement avantageux de réalisation du dispositif selon l'invention, le conteneur rigide externe est un conteneur de marchandise apte à être monté sur, et transporté par, un semi-remorque, et les interfaces externes froides et chaudes sont agencées sur une même paroi latérale dudit conteneur externe.

Dans cette configuration, les interfaces externes froides et chaudes peut être agencées sur la paroi latérale du conteneur qui est située à l'arrière par rapport au sens d'avancement lorsque le conteneur est monté sur le semi-remorque. Le raccordement des interfaces externes froides et chaudes en vue des opérations de charge et/ou décharge peut ainsi être réalisé par une simple marche arrière opérée par le semi-remorque.

En outre, dans cette configuration, le conteneur rigide externe peut comporter, comme il est connu dans le domaine des conteneurs de marchandise, une porte d'accès à l'intérieur dudit conteneur, laquelle porte est agencée sur la paroi latérale opposée à la paroi latérale recevant les interfaces externes froides et chaudes. Ainsi, lorsque le conteneur est monté sur le semi-remorque, ladite porte d'accès est située du côté de la cabine du semi-remorque.

Avantageusement, le dispositif selon l'invention peut comprendre :
- au moins une vanne agencée entre l'interface externe froide et l'interface interne froide, et/ou
- au moins une vanne agencée entre l'interface externe chaude et l'interface interne chaude ;
prévues pour autoriser ou non le passage de(s) fluide(s) depuis/vers le module de stockage.

Il est ainsi possible d'isoler le module de stockage, par exemple lors de son transport.

En particulier, le dispositif peut comprendre une vanne agencée sur le conduit froid et une vanne agencée sur le conduit chaud.

Particulièrement, le dispositif selon l'invention peut comprendre au moins un capteur de température et/ou au moins un capteur de pression, prévus pour mesurer la température et/ou la pression du fluide de charge et/ou de décharge.

Avantageusement, un capteur de température et/ou un capteur de pression peuvent être prévus sur le conduit froid, et un capteur de température et/ou un capteur de pression peuvent aussi être prévus sur le conduit chaud.

Alternativement, ou en plus, au moins un capteur de température et/ou au moins un capteur de pression peuvent être prévus sur/dans le module de stockage prévus pour mesurer la température et la pression à l'intérieur du module de stockage.

Dans un mode de réalisation avantageux, le dispositif selon l'invention peut comprendre un moyen de commande des vannes en fonction des données mesurées par les capteurs de température et/ou de pression.

Par exemple, le moyen de commande peut fermer une vanne si la température dans le conduit froid est supérieure à un premier seuil de température, en particulier inférieur à 600°C, de préférence inférieur à 200°C. De même, le moyen de commande peut fermer une vanne si la température dans le conduit chaud est supérieure à un deuxième seuil de température, en particulier compris entre 200 et 1000°C.

Dans une version préférée de réalisation du dispositif selon l'invention, le module de stockage peut comprendre :
- une couche isolante rigide disposée entre ledit conteneur interne et ledit ensemble de stockage, et
- une couche isolante souple disposée entre ladite couche isolante rigide et ledit conteneur interne.

L'ensemble de stockage peut être un ensemble de morceaux en matériau à inertie thermique, par exemple des billes, des cylindres, des anneaux de Raschig et/ou des granulats en matériau à inertie thermique.

L'ensemble de stockage peut avoir une longueur comprise entre 100 cm et 500 cm, en particulier comprise entre 250 cm et 350 cm.

La couche isolante rigide peut être réalisée avec des briques rigides, c'est-à-dire par assemblage de briques rigides.

La couche isolante rigide peut avoir une épaisseur comprise entre 100 mm et 150 mm, en particulier égale à 114 mm.

La couche isolante souple peut comprendre au moins une paroi réalisée en silicate de calcium.

La couche isolante souple peut avoir une épaisseur comprise entre 100 mm et 150 mm, en particulier égale à 115 mm.

En outre, le module de stockage peut comprendre :
- une grille, dite froide, agencée entre l'interface interne froide et l'ensemble de stockage, et/ou
- une grille, dite chaude, agencée entre l'interface interne chaude et l'ensemble de stockage ;
prévues pour maintenir l'ensemble de stockage.

Lesdites grilles peuvent être fixées au conteneur interne de façon amovible ou démontable, par exemple par vissage, ou permanente, par exemple par soudage.

Avantageusement, le module de stockage peut comprendre :
- au moins un diffuseur, dit froid, agencé entre l'interface interne froide et l'ensemble de stockage et prévu pour la dispersion de fluide depuis l'interface interne froide vers l'ensemble de stockage, et/ou la convergence de fluide depuis l'ensemble de stockage vers ladite interface interne froide, et/ou
- au moins un diffuseur, dit chaud, agencé entre l'interface interne chaude et l'ensemble de stockage prévu pour la dispersion de fluide depuis l'interface interne chaude vers l'ensemble de stockage, et/ou la convergence de fluide depuis l'ensemble de stockage vers ladite interface interne chaude.

La section du diffuseur froid du côté de l'interface interne froide peut être plus petite que la section dudit diffuseur froid du côté de l'ensemble de stockage.

De la même façon, la section du diffuseur chaud du côté de l'interface interne chaude peut être plus petite que la section dudit diffuseur chaud du côté de l'ensemble de stockage.

De préférence, la section desdits diffuseurs du côté de l'ensemble de stockage peut avoir les mêmes hauteur et largeur que l'ensemble de stockage.

La section du diffuseur froid, respectivement chaud, du côté de l'interface interne froide, respectivement chaude, peut avoir les mêmes dimensions que le conduit froid, respectivement chaud.

En particulier, la grille froide peut être agencée entre le diffuseur froid et l'ensemble de stockage.

La grille chaude peut être agencée entre le diffuseur chaud et l'ensemble de stockage.

En particulier, le conteneur interne peut comprendre une ouverture sur sa paroi supérieure, pour permettre l'accès à l'ensemble de stockage.

Ladite ouverture peut être agencée suivant toute la longueur de l'ensemble de stockage pour permettre le remplissage, le vidage ou toute opération de maintenance dans l'ensemble de stockage.

Le conteneur externe peut quant à lui comprendre une ouverture agencée sur sa paroi supérieure au niveau du module de stockage, pour permettre l'accès à l'ensemble de stockage.

Ladite ouverture peut être une trappe pour permettre l'accès d'un opérateur au module de stockage, aux conduits froid et chaud en vue d'une maintenance ou toute autre opération d'intervention dans le conteneur externe.

En outre, le dispositif selon l'invention peut comprendre au moins un réducteur de diamètre prévu pour relier l'interface interne froide, respectivement l'interface interne chaude, au conduit froid, respectivement au conduit chaud.

### Présentation des figures

D'autres avantages et caractéristiques apparaîtront à l'examen de la description détaillée d'exemples de réalisation nullement limitatifs, et des dessins annexés sur lesquels :
- la Figure 1 est une représentation schématique d'une vue en élévation et en coupe d'un premier exemple du dispositif selon l'invention ; et
- la Figure 2 est une représentation schématique d'une vue de coté en coupe du premier exemple du dispositif selon l'invention.

### Description détaillée de l'invention

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieure.

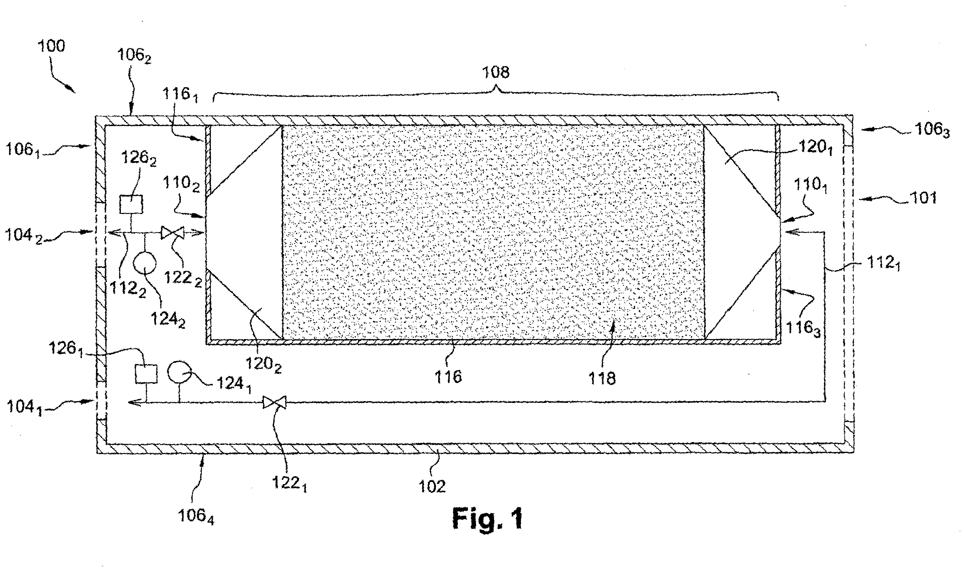

En référence à la figure 1, le dispositif 100 selon l'invention comprend un conteneur 102, dit externe, comprenant une interface 104₁, dite interface externe froide, prévue pour le passage d'un fluide de charge et/ou de décharge de calories/frigories. Le conteneur externe 102 comprend une interface 104₂, dite interface externe chaude, prévue pour le passage desdits fluides à une température supérieure à la température desdits fluides au niveau de l'interface externe froide 104₁.

Les interfaces externes 104 sont agencées sur une même paroi latérale 106₁ du conteneur externe 102 située à l'opposé de la paroi latérale 106₃ sur laquelle est ménagée une porte d'accès 101 à l'intérieur du conteneur 102, porte d'accès 101 qui est destinée à être située du côté de la cabine du conducteur lorsque le conteneur 102 est un conteneur de marchandise apte à être monté sur un semi-remorque.

Le dispositif 100 comprend en outre un module de stockage 108 agencé dans ledit conteneur externe 102, contigu à une paroi latérale 106₂ dudit conteneur externe 102 et à distance des autres parois latérales 106₁, 106₃ et 106₄ de sorte à former un espace entre ces parois et le module de stockage 108. Cet espace peut être vide ou rempli d'un isolant thermique.

Le module de stockage 108 comprend une interface 110₁, dite interface interne froide, reliée à l'interface externe froide 104₁ par un conduit 112₁, dit froid, et une interface 110₂, dite interface interne chaude, reliée à l'interface externe chaude 104₂ par un conduit 112₂, dit chaud.

Le conduit chaud 112₂ a un diamètre supérieur au diamètre du conduit froid 112₁. En effet, le(s) fluide(s) traverse(nt) le conduit chaud 112₂ à une température supérieure à la température de(s) fluide(s) traversant le conduit froid 112₁, le volume de(s) fluide(s) traverse(nt) le conduit chaud 112₂ est donc plus important que celui de(s) fluide(s) traversant le conduit froid 112₁.

L'interface interne chaude 110₂ est agencée adjacente à la paroi 106₁ tandis que l'interface interne froide 110₁ est agencée adjacente à la paroi 106₃ opposée à la paroi 106₁ comportant les interfaces externes 104.

De plus, le conduit froid 112₁ est un conduit coudé pour relier l'interface interne froide 110₁ à l'interface externe froide 104₁. Le conduit froid 112₁ est disposé dans l'espace formé entre le module de stockage 108 et les parois 106₃ et 106₄. Cet espace permet également de former une gaine technique.

Le module de stockage 108 comprend en outre un conteneur 116, dit interne, en acier, par exemple, et comportant les interfaces internes 110. Plus précisément, l'interface interne chaude 110₂ est agencée sur une paroi latérale 116₁ du conteneur interne 116 qui est adjacente à la paroi 106₁ du conteneur externe 102, tandis que l'interface interne froide 110₁ est agencée sur une paroi latérale opposée 116₃ du conteneur interne 116 qui est adjacente à la paroi 106₃ du conteneur externe 102 opposée à la paroi 106₁ comportant les interfaces externes 104.

Le conteneur interne 116 peut être fixé au conteneur externe 102 au niveau de ses parois inférieures et de l'une de ses parois longitudinale par tout moyen de fixation tel que par soudage, par vissage, etc. On préfère la fixation du conteneur interne 116 à une paroi longitudinale du conteneur externe 102 en raison des agencements structurels plus adaptés des parois longitudinales du conteneur externe 102.

Le conteneur interne 116 peut avoir une longueur égale à 420 cm, une largeur égale à 220 cm et une hauteur égale à 220 cm. L'épaisseur des parois du conteneur interne 116 peut être égale à 6 mm.

Le conteneur interne 116 entoure un ensemble de stockage 118 qui peut être un ensemble de billes ou de cylindres en matériau à inertie thermique.

L'ensemble de stockage 118 peut avoir une longueur égale à 325 cm, une largeur égale à 170 cm et une hauteur égale à 170 cm.

Le module de stockage 108 comprend aussi un diffuseur 120₁, dit froid, agencé entre l'interface interne froide 110₁ et l'ensemble de stockage 118 prévu pour la dispersion et/ou la convergence de(s) fluide(s), depuis/vers l'interface interne froide 110₁ vers/depuis l'ensemble de stockage 118.

Le module de stockage 108 comprend aussi un diffuseur 120₂, dit chaud, agencé entre l'interface interne chaude 110₂ et l'ensemble de stockage 118 prévu pour la dispersion et/ou la convergence de(s) fluide(s) depuis/vers l'interface interne chaude 110₂ vers/depuis l'ensemble de stockage 118.

Les sections des diffuseurs 120 du côté de l'ensemble de stockage 118 sont identiques à la section de l'ensemble de stockage 118.

La section du diffuseur chaud 120₂ du côté de l'interface interne chaude 110₂ a des dimensions proches des dimensions du conduit chaud 112₂. De même, la section du diffuseur froid 120₁ du côté de l'interface interne froide 110₁ a des dimensions proches des dimensions du conduit froid 112₁.

Par ailleurs, le module de stockage 108 comprend une couche isolante rigide et/ou une couche isolante souple, non représentées sur la figure 1, agencées entre l'ensemble de stockage 118 et le conteneur interne 116.

Le dispositif 100 comprend deux vannes 122₁-122₂ agencées respectivement sur le conduit froid 112₁ et le conduit chaud 112₂.

Le dispositif 100 comprend aussi un capteur de pression 124₁ et un capteur de température 126₁ agencés sur le conduit froid 112₁, pour mesurer la pression et la température des fluides dans le conduit froid 112₁.

Le dispositif 100 comprend aussi un capteur de pression 124₂ et un capteur de température 126₂ agencés sur le conduit chaud 112₂, pour mesurer la pression et la température des fluides dans le conduit chaud 112₂.

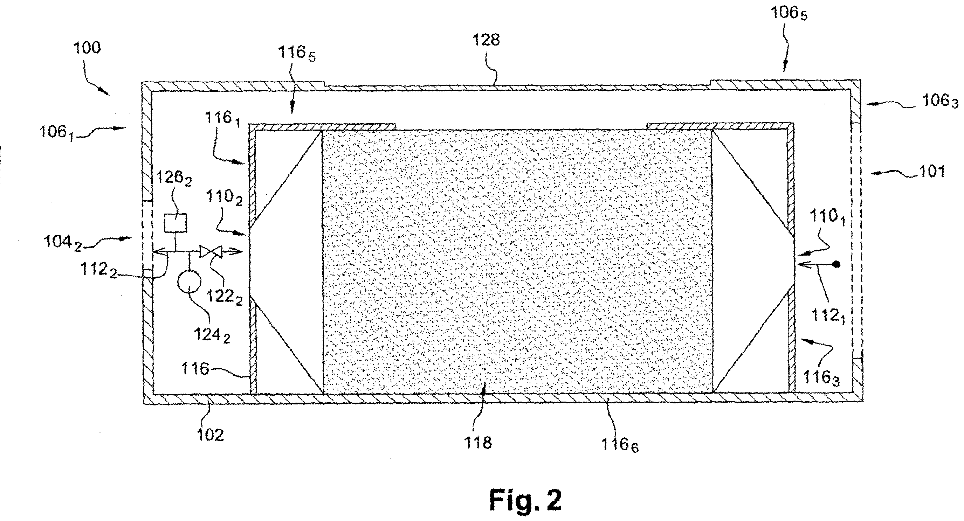

La figure 2 est une représentation schématique d'une vue de coté en coupe du premier exemple du dispositif selon l'invention.

Le dispositif 100 comprend une trappe 128 prévue sur la paroi supérieure 106₅ du conteneur externe 102 pour permettre l'accès au module de stockage 108 et/ou aux conduits 112, en vue d'une opération de maintenance. En outre, le conteneur interne 116 comprend une ouverture prévue sur sa paroi supérieure 116₅ pour permettre l'accès, depuis l'extérieur du conteneur externe 102, à l'ensemble de stockage 118, pour remplir ou vider l'ensemble de stockage 118 ou pour une intervention de maintenance dans l'ensemble de stockage 118.

Pour stocker des calories dans le dispositif 100, le fluide de charge à une température comprise entre 200 et 1000°C est injecté dans le module de stockage 108 à travers l'interface externe chaude 104₂. Le diffuseur chaud 120₂ disperse le fluide de charge dans l'ensemble de stockage 118, ce qui permet le transfert des calories depuis le fluide de charge à l'ensemble de stockage 118. En traversant l'ensemble de stockage 118, le fluide de charge est refroidi et atteint une température inférieure à 600°C, de préférence inférieure à 200°C. Le fluide de charge est ensuite canalisé à travers le diffuseur froid 120₁ vers l'interface interne froide 110₁. Le fluide de charge est enfin évacué vers l'interface externe froide 104₁ à travers le conduit froid 112₁.

Le dispositif 100 peut être transporté, grâce aux conteneurs rigides externe 102 et interne 116, sur un autre site que celui exploité pour le stockage de calories. Comme indiqué précédemment, le transport du dispositif peut être assuré par un semi-remorque lorsque le conteneur externe 102 est un conteneur de marchandise.

A l'inverse, pour réutiliser les calories stockées dans le dispositif 100, un fluide de décharge est injecté dans l'interface externe froide 104₁ à une température inférieure à 200°C. Le fluide de décharge traverse le conduit froid 112₁ et est introduit dans le module de stockage 108 à travers l'interface interne froide 110₁. Le diffuseur froid 120₁ disperse le fluide de décharge dans l'ensemble de stockage 118 qui transfert les calories, préalablement stockées, au fluide de décharge qui atteint une température comprise entre 200 et 1000 °C. Le fluide de décharge est ensuite canalisé à travers le diffuseur chaud 120₂ vers l'interface interne chaude 110₂. Le fluide de décharge est enfin évacué vers l'interface externe chaude 104₂ à travers le conduit chaud 112₂.

Le dispositif 100 peut comprendre en outre un moyen de commande, non représenté sur les Figures 1 et 2, des vannes 122 en fonction de la température et de la pression mesurées par les capteurs 124 et 126.

Par exemple, le moyen de commande peut fermer la vanne 122₁ si la température dans le conduit froide 112₁ est supérieure à 200°C ou fermer la vanne 122₂ si la température dans le conduit chaud 112₂ est supérieure à 1000°C ou inférieure à 200°C.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif (100) de stockage de chaleur/froid, par transfert depuis un fluide, dit de charge, en vue d'une réutilisation ultérieure par transfert vers un fluide, dit de décharge, ledit dispositif (100) comprenant :
- un conteneur rigide externe (102) formant les parois (106₁; 106₂; 106₃; 106₄; 106₅, 106₆) dudit dispositif (100),
- un module de stockage rigide (108) agencé dans ledit conteneur externe (102) et comprenant un conteneur interne rigide (116) formant les parois dudit module de stockage (108) et un ensemble de stockage (118) agencé dans ledit conteneur interne (116) prévu pour emmagasiner des calories/frigories,
- une interface externe froide (104₁) agencée sur une paroi (106₁; 106₂; 106₃; 106₄; 106₅, 106₆) du conteneur externe (102) et communicante avec une interface interne froide (110₁) agencée sur le module de stockage (108), lesdites interfaces froides (104₁, 110₁) assurant le passage des fluides dits froids entre l'interface externe froide (104₁) et le module de stockage (108),
- une interface externe chaude (104₂) agencée sur une paroi (106₁; 106₂; 106₃; 106₄; 106₅, 106₆) du conteneur externe (102) et communicante avec une interface interne chaude (110₂) agencée sur le module de stockage (108), lesdites interfaces chaudes (104₂, 110₂) assurant le passage des fluides dits chauds présentant une température supérieure à la température des fluides froids, entre l'interface externe chaude (104₂) et le module de stockage (108);
lesdites interfaces externes froides et chaudes (104₁, 104₂) étant agencées sur une même paroi (106₁) ou sur deux parois (106) adjacentes dudit conteneur externe (102), et **caractérisé en ce que**
- une couche isolante souple et/ou une couche isolante rigide est ou sont agencée(s) entre l'ensemble de stockage (118) et le conteneur interne rigide (116).

2. Dispositif selon la revendication 1, **caractérisé en ce que** les interfaces externes froides et chaudes (104₁, 104₂) sont agencées sur une même paroi (106₁) dudit conteneur externe (102).

3. Dispositif selon l'une quelconque des revendications 1 et 2, **caractérisé en ce que** les interfaces internes froides (104₁) et chaudes (104₂) sont distantes des parois du conteneur externe (102).

4. Dispositif selon l'une quelconque des revendications précédentes, **caractérisé en ce que** les interfaces internes froides (104₁) et chaudes (104₂) sont agencées sur deux parois (106) différentes du module de stockage (108).

5. Dispositif selon l'une quelconque des revendications précédentes, **caractérisé en ce que** l'interface interne chaude (110₂) est située à proximité et en regard de la paroi (106₁; 106₂; 106₃; 106₄; 106₅, 106₆) recevant l'interface externe chaude (104₂).

6. Dispositif (100) selon l'une quelconque des revendications précédentes, **caractérisé en ce qu'**il comprend au moins un conduit froid (112₁) reliant l'interface externe froide (104₁) à l'interface interne froide (110₁), et au moins un conduit chaud (112₂) reliant l'interface externe chaude (104₂) à l'interface interne chaude (110₂), et **en ce que** les dits conduits froid et chaud ((112₁, 112₂) sont agencés à l'intérieur du conteneur rigide externe (102).

7. Dispositif selon la revendication 6, **caractérisé en ce que** le conduit froid (112₁) a une dimension, en particulier un diamètre, inférieure à une dimension, en particulier un diamètre, du conduit chaud (112₂).

8. Dispositif selon l'une quelconque des revendications 6 et 7, **caractérisé en ce que** le module de stockage (108) est agencé à distance d'au moins une paroi (106₁; 106₂; 106₃; 106₄; 106₅, 106₆) du conteneur rigide externe (102) en formant au moins un espace entre le module de stockage (108) et ladite paroi (106₁; 106₃; 106₄; 106₅) pour permettre le passage des conduits froid et/ou chaud ((112₁, 112₂).

9. Dispositif selon la revendication 8, **caractérisé en ce que** le module de stockage est agencé contre la paroi inférieure (106₆) du conteneur rigide externe (102) et contre une paroi longitudinale (106₆) dudit conteneur (102), **en ce que** les interfaces externes froides et chaudes (104₁, 104₂) sont agencées sur une même paroi latérale (1061) dudit conteneur externe (102), **en ce que** les interfaces internes froides et chaudes (110₁, 110₂) sont agencées sur deux parois opposées du module de stockage (108), et **en ce que** l'interface interne chaude (110₂) est située à proximité et en regard de l'interface externe chaude (104₂).

10. Dispositif (100) selon l'une quelconque des revendications précédentes, **caractérisé en ce que** le conteneur rigide externe (102) est un conteneur de marchandise apte à être monté sur et transporté par un semi-remorque, et **en ce que** les interfaces externes froides et chaudes (104₁, 104₂) sont agencées sur une même paroi latérale (106₁) dudit conteneur externe (102).

11. Dispositif selon la revendication 10, **caractérisé en ce que** le conteneur rigide externe (102) comporte une porte (101) d'accès à l'intérieur dudit conteneur (102) qui est agencée sur la paroi latérale opposée (106₃) à la paroi latérale (106₁) recevant les interfaces externes froides et chaudes (104₁, 104₂).

12. Dispositif selon l'une quelconque des revendications précédentes, **caractérisé en ce qu'**il comprend :
- au moins une vanne (122₁) agencée entre l'interface externe froide (104₁) et l'interface interne froide (110₁), et/ou
- au moins une vanne (122₂) agencée entre l'interface externe chaude (104₂) et l'interface interne chaude (110₂) ;
- prévues pour autoriser ou non le passage de(s) fluide(s) depuis/vers le module de stockage (108).

13. Dispositif selon l'une quelconque des revendications précédentes, **caractérisé en ce qu'**il comprend au moins un capteur de température (126) et/ou au moins un capteur de pression (124), prévus pour mesure la température et/ou la pression du fluide de charge et/ou de décharge.

14. Dispositif selon la revendication 13, **caractérisé en ce qu'**il comprend un moyen de commande des vannes (122) en fonction des données mesurées par les capteurs de température (126) et/ou de pression (124).

15. Dispositif selon l'une quelconque des revendications précédentes, **caractérisé en ce que** le module de stockage (108) comprend :
- une couche isolante rigide disposée entre ledit conteneur interne (116) et ledit ensemble de stockage (118), et
- une couche isolante souple disposée entre ladite couche isolante rigide et ledit conteneur interne (116).

16. Dispositif selon la revendication 15, **caractérisé en ce que** le module de stockage comprend :
- au moins un diffuseur (120₁), dit froid, agencé entre l'interface interne froide (110₁) et l'ensemble de stockage (108) prévu pour la dispersion de fluide depuis l'interface interne froide (110₁) vers l'ensemble de stockage (108), et/ou la convergence de fluide depuis l'ensemble de stockage (108) vers ladite interface interne froide (110₁), et/ou
- au moins un diffuseur (120₂), dit chaud, agencé entre l'interface interne chaude (110₂) et l'ensemble de stockage (108) prévu pour la dispersion de fluide depuis l'interface interne chaude (110₂) vers l'ensemble de stockage (108), et/ou la convergence de fluide depuis l'ensemble de stockage (108) vers ladite interface interne chaude (110₂).

17. Dispositif (100) selon l'une quelconque des revendications 14 et 15, **caractérisé en ce que** le conteneur interne (116) comprend une ouverture sur sa paroi supérieure, et **en ce que** le conteneur externe (102) comprend une ouverture agencée sur sa paroi supérieure (106₅) au niveau du module de stockage (108), pour permettre l'accès à l'ensemble de stockage (118).

## Patentansprüche

1. Vorrichtung (100) zur Speicherung von Wärme/Kälte durch Übertragung von einem Fluid, Beladefluid genannt, zwecks einer späteren Wiederverwendung durch Übertragung auf ein Fluid, Entladefluid genannt, wobei die Vorrichtung (100) umfasst:
- einen äußeren starren Behälter (102), der die Wände (106₁; 106₂; 106₃; 106₄; 106₅; 106₆) der Vorrichtung (100) bildet,
- ein starres Speichermodul (108), das im äußeren Behälter (102) angeordnet ist und einen starren inneren Behälter (116), der die Wände des Speichermoduls (108) bildet, und eine im inneren Behälter (116) angeordnete Speicheranordnung (118), die zum Speichern von Kalorien/Frigorien vorgesehen ist, umfasst,
- eine kalte äußere Schnittstelle (104₁), die an einer Wand (106₁; 106₂; 106₃; 106₄; 106₅; 106₆) des äußeren Behälters (102) angeordnet ist und mit einer kalten inneren Schnittstelle (110₁) in Verbindung steht, die am Speichermodul (108) angeordnet ist, wobei die kalten Schnittstellen (104₁, 110₁) den Durchfluss der sogenannten kalten Fluide zwischen der kalten äußeren Schnittstelle (104₁) und dem Speichermodul (108) sicherstellen;
- eine heiße äußere Schnittstelle (104₂), die an einer Wand (106₁; 106₂; 106₃; 106₄; 106₅; 106₆) des äußeren Behälters (102) angeordnet ist und mit einer heißen inneren Schnittstelle (110₂) in Verbindung steht, die am Speichermodul (108) angeordnet ist, wobei die heißen Schnittstellen (104₂, 110₂) den Durchfluss der sogenannten heißen Fluide, die eine Temperatur aufweisen, die höher als die Temperatur der kalten Fluide ist, zwischen der heißen äußeren Schnittstelle (104₂) und dem Speichermodul (108) sicherstellen;
wobei die kalte und die heiße äußere Schnittstelle (104₁, 104₂) an derselben Wand (106₁) oder an zwei benachbarten Wänden (106) des äußeren Behälters (102) angeordnet sind, und
**dadurch gekennzeichnet, dass**
- eine flexible isolierende Schicht und/oder eine starre isolierende Schicht zwischen der Speicheranordnung (118) und dem starren inneren Behälter (116) angeordnet ist bzw. sind.

2. Vorrichtung nach Anspruch 1, **dadurch gekennzeichnet, dass** die kalte und die heiße äußere Schnittstelle (104₁, 104₂) an derselben Wand (106₁) des äußeren Behälters (102) angeordnet sind.

3. Vorrichtung nach einem der Ansprüche 1 und 2, **dadurch gekennzeichnet, dass** die kalte (104₁) und die heiße (104₂) innere Schnittstelle von den Wänden des äußeren Behälters (102) entfernt sind.

4. Vorrichtung nach einem der vorhergehenden Ansprüche, **dadurch gekennzeichnet, dass** die kalte (104₁) und die heiße (104₂) innere Schnittstelle an zwei verschiedenen Wänden (106) des Speichermoduls (108) angeordnet sind.

5. Vorrichtung nach einem der vorhergehenden Ansprüche, **dadurch gekennzeichnet, dass** sich die heiße innere Schnittstelle (110₂) in der Nähe und gegenüber der Wand (106₁; 106₂; 106₃; 106₄; 106₅; 106₆) befindet, welche die heiße äußere Schnittstelle (104₂) aufnimmt.

6. Vorrichtung (100) nach einem der vorhergehenden Ansprüche, **dadurch gekennzeichnet, dass** sie wenigstens eine kalte Leitung (112₁), welche die kalte äußere Schnittstelle (104₁) mit der kalten inneren Schnittstelle (110₁) verbindet, und wenigstens eine heiße Leitung (112₂), welche die heiße äußere Schnittstelle (104₂) mit der heißen inneren Schnittstelle (110₂) verbindet, umfasst, und dadurch, dass die kalte und die heiße Leitung (112₁, 112₂) im Inneren des äußeren starren Behälters (102) angeordnet sind.

7. Vorrichtung nach Anspruch 6, **dadurch gekennzeichnet, dass** die kalte Leitung (112₁) eine Abmessung, insbesondere einen Durchmesser, aufweist, die kleiner als eine Abmessung, insbesondere ein Durchmesser, der heißen Leitung (112₂) ist.

8. Vorrichtung nach einem der Ansprüche 6 und 7, **dadurch gekennzeichnet, dass** das Speichermodul (108) in einem Abstand von wenigstens einer Wand (106₁; 106₂; 106₃; 106₄; 106₅; 106₆) des äußeren starren Behälters (102) angeordnet ist und dabei wenigstens einen Zwischenraum zwischen dem Speichermodul (108) und der Wand (106₁; 106₃; 106₄; 106₅) bildet, um den Durchgang der kalten und/oder heißen Leitung(en) (112₁, 112₂) zu ermöglichen.

9. Vorrichtung nach Anspruch 8, **dadurch gekennzeichnet, dass** das Speichermodul an der unteren Wand (106₆) des äußeren starren Behälters (102) und an einer Längswand (106₆) des Behälters (102) anliegend angeordnet ist, dadurch, dass die kalte und die heiße äußere Schnittstelle (104₁, 104₂) an derselben seitlichen Wand (106₁) des äußeren Behälters (102) angeordnet sind, dadurch, dass die kalte und die heiße innere Schnittstelle (110₁, 110₂) an zwei gegenüberliegenden Wänden des Speichermoduls (108) angeordnet sind, und dadurch, dass sich die heiße innere Schnittstelle (110₂) in der Nähe und gegenüber der heißen äußeren Schnittstelle (104₂) befindet.

10. Vorrichtung (100) nach einem der vorhergehenden Ansprüche, **dadurch gekennzeichnet, dass** der äußere starre Behälter (102) ein Warencontainer ist, der auf einem Sattelauflieger angebracht und von diesem transportiert werden kann, und dadurch, dass die kalte und die heiße äußere Schnittstelle (104₁, 104₂) an derselben seitlichen Wand (106₁) des äußeren Behälters (102) angeordnet sind.

11. Vorrichtung nach Anspruch 10, **dadurch gekennzeichnet, dass** der äußere starre Behälter (102) eine Zugangstür (101) zum Inneren des Behälters (102) aufweist, welche an der seitlichen Wand (106₃) angeordnet ist, die der seitlichen Wand (106₁), welche die kalte und die heiße äußere Schnittstelle (104₁, 104₂) aufnimmt, gegenüberliegt.

12. Vorrichtung nach einem der vorhergehenden Ansprüche, **dadurch gekennzeichnet, dass** sie umfasst:
- wenigstens ein Ventil (122₁), das zwischen der kalten äußeren Schnittstelle (104₁) und der kalten inneren Schnittstelle (110₁) angeordnet ist, und/oder
- wenigstens ein Ventil (122₂), das zwischen der heißen äußeren Schnittstelle (104₂) und der heißen inneren Schnittstelle (110₂) angeordnet ist;
- die dafür vorgesehen sind, den Durchfluss von Fluid(en) aus dem/zum Speichermodul (108) zu ermöglichen oder nicht.

13. Vorrichtung nach einem der vorhergehenden Ansprüche, **dadurch gekennzeichnet, dass** sie wenigstens einen Temperatursensor (126) und/oder wenigstens einen Drucksensor (124) umfasst, die für die Messung der Temperatur und/oder des Drucks des Belade- und/oder Entladefluids vorgesehen sind.

14. Vorrichtung nach Anspruch 13, **dadurch gekennzeichnet, dass** sie ein Mittel zur Steuerung der Ventile (122) in Abhängigkeit von den Daten, die von den Temperatur- (126) und/oder Drucksensoren (124) gemessen werden, umfasst.

15. Vorrichtung nach einem der vorhergehenden Ansprüche, **dadurch gekennzeichnet, dass** das Speichermodul (108) umfasst:
- eine starre isolierende Schicht, die zwischen dem inneren Behälter (116) und der Speicheranordnung (118) angeordnet ist, und
- eine flexible isolierende Schicht, die zwischen der starren isolierenden Schicht und dem inneren Behälter (116) angeordnet ist.

16. Vorrichtung nach Anspruch 15, **dadurch gekennzeichnet, dass** das Speichermodul umfasst:
- wenigstens einen sogenannten kalten Zerstäuber (120₁), der zwischen der kalten inneren Schnittstelle (110₁) und der Speicheranordnung (108) angeordnet ist und für die Verteilung von Fluid von der kalten inneren Schnittstelle (110₁) aus in Richtung der Speicheranordnung (108) und/oder die Zusammenführung von Fluid von der Speicheranordnung (108) aus in Richtung der kalten inneren Schnittstelle (110₁) vorgesehen ist, und/oder
- wenigstens einen sogenannten heißen Zerstäuber (120₂), der zwischen der heißen inneren Schnittstelle (110₂) und der Speicheranordnung (108) angeordnet ist und für die Verteilung von Fluid von der heißen inneren Schnittstelle (110₂) aus in Richtung der Speicheranordnung (108) und/oder die Zusammenführung von Fluid von der Speicheranordnung (108) aus in Richtung der heißen inneren Schnittstelle (110₂) vorgesehen ist.

17. Vorrichtung (100) nach einem der Ansprüche 14 und 15, **dadurch gekennzeichnet, dass** der innere Behälter (116) eine Öffnung an seiner oberen Wand umfasst, und dadurch, dass der äußere Behälter (102) eine Öffnung umfasst, die an seiner oberen Wand (106₅) am Speichermodul (108) angeordnet ist, um den Zugang zur Speicheranordnung (118) zu ermöglichen.

## Claims

1. Device (100) for storage of heat/cold by means of transfer from a fluid, known as a charge fluid, for subsequent reuse by means of transfer to a fluid, known as a discharge fluid, said device (100) comprising:
- an external rigid container (102) forming the walls (106₁; 106₂; 106₃; 106₄; 106₅, 106₆) of said device (100) ;
- a rigid storage module (108) arranged inside said external container (102) and comprising an internal rigid container (116) forming the walls of said storage module (108), and a storage assembly (118) arranged inside said internal container (116) designed for storage of the calories/frigories;
- a cold external interface (104₁) arranged on a wall (106₁; 106₂; 106₃; 106₄; 106₅, 106₆) of the external container (102) and in communication with a cold internal interface (110₁) arranged on the storage module (108), said cold interfaces (104₁, 110₁) ensuring the passage of the so-called cold fluids between the cold external interface (104₁) and the storage module (108);
- a hot external interface (104₂) arranged on a wall (106₁; 106₂; 106₃; 106₄; 106₅, 106₆) of the external container (102) and in communication with a hot internal interface (110₂) arranged on the storage module (108), said hot interfaces (104₂, 110₂) ensuring the passage of the so-called hot fluids having a temperature greater than the temperature of the cold fluids, between the hot external interface (104₂) and the storage module (108);
said hot and cold external interfaces (104₁, 104₂) being arranged on a single wall (106₁) or on two adjacent walls (106) of said external container (102); and wherein
- a flexible insulating layer and/or a rigid insulating layer is or are arranged between the storage assembly (118) and the internal rigid container (116).

2. Device according to Claim 1, wherein the cold and hot external interfaces (104₁, 104₂) are arranged on a single wall (106₁) of said external container (102).

3. Device according to either of Claims 1 and 2, wherein the cold (104₁) and hot (104₂) internal interfaces are spaced from the walls of the external container (102).

4. Device according to any one of the preceding claims, wherein the cold (104₁) and hot (104₂) internal interfaces are arranged on two different walls (106) of the storage module (108).

5. Device according to any one of the preceding claims, wherein the hot internal interface (110₂) is situated in the vicinity of and facing the wall (106₁; 106₂; 106₃; 106₄; 106₅, 106₆) which receives the hot external interface (104₂).

6. Device (100) according to any one of the preceding claims, wherein it comprises at least one cold duct (112₁), connecting the cold external interface (104₁) to the cold internal interface (110₁), and at least one hot duct (112₂) connecting the hot external interface (104₂) to the hot internal interface (110₂), and in that said cold and hot ducts (112₁, 112₂) are arranged in the interior of the external rigid container (102).

7. Device according to Claim 6, wherein the cold duct (112₁) has a dimension, in particular a diameter, which is smaller than a dimension, in particular a diameter, of the hot duct (112₂) .

8. Device according to either one of Claims 6 and 7, wherein the storage module (108) is arranged spaced from at least one wall (106₁; 106₂; 106₃; 106₄; 106₅, 106₆) of the external rigid container (102), forming at least a space between the storage module (108) and said wall (106₁; 106₃; 106₄; 106₅), in order to permit the passage of the cold and/or hot ducts (112₁, 112₂).

9. Device according to Claim 8, wherein the storage module is arranged against the lower wall (106₆) of the external rigid container (102), and against a longitudinal wall (106₆) of said container (102), in that the cold and hot external interfaces (104₁, 104₂) are arranged on a single lateral wall (1061) of said external container (102), in that the cold and hot internal interfaces (110₁, 110₂) are arranged on two opposite walls of the storage module (108), and in that the hot internal interface (110₂) is situated in the vicinity of and facing the hot external interface (104₂) .

10. Device (100) according to any one of the preceding claims, wherein the external rigid container (102) is a freight container which can be mounted on, and transported by, a semitrailer, and in that the cold and hot external interfaces (104₁, 104₂) are arranged on a single lateral wall (106₁) of said external container (102) .

11. Device according to claim 10, wherein the external rigid container (102) comprises a door (101) for access to the interior of said container (102), which door is arranged on the lateral wall (106₃) opposite the lateral wall (106₁) which receives the cold and hot external interfaces (104₁, 104₂).

12. Device according to any one of the preceding claims, wherein it comprises:
- at least one valve (122₁) arranged between the cold external interface (104₁) and the cold internal interface (110₁); and/or
- at least one valve (122₂) arranged between the hot external interface (104₂) and the hot internal interface (110₂) ;
- and which are designed to permit or prevent the passage of the fluid(s) from/to the storage module (108) .

13. Device according to any one of the preceding claims, wherein it comprises at least one temperature sensor (126) and/or at least one pressure sensor (124), which are designed to measure the temperature and/or the pressure of the charge and/or discharge fluid.

14. Device according to Claim 13, wherein it comprises a means for control of the valves (122) according to the data measured by the temperature (126) and/or pressure (124) sensors.

15. Device according to any one of the preceding claims, wherein the storage module (108) comprises:
- a rigid insulating layer disposed between said internal container (116) and said storage assembly (118); and
- a flexible insulating layer disposed between said rigid insulating layer and said internal container (116) .

16. Device according to Claim 15, wherein the storage module comprises:
- at least one diffuser (120₁), known as a cold diffuser, which is arranged between the cold internal interface (110₁) and the storage assembly (108), and is designed for the dispersion of fluid from the cold internal interface (110₁) to the storage assembly (108), and/or the convergence of fluid from the storage assembly (108) to said cold internal interface (110₁); and/or
- at least one diffuser (120₂), known as a hot diffuser, which is arranged between the hot internal interface (110₂) and the storage assembly (108), and is designed for the dispersion of fluid from the hot internal interface (110₂) to the storage assembly (108), and/or the convergence of fluid from the storage assembly (108) to said hot internal interface (110₂).

17. Device (100) according to either one of Claims 14 and 15, wherein the internal container (116) comprises an opening in its upper wall, and in that the external container (102) comprises an opening arranged in its upper wall (106₅) at the level of the storage module (108), in order to permit access to the storage assembly (118).
